# EUROPÄISCHE PATENTSCHRIFT

(11) **EP 3 669 240 B1**
(45) Veröffentlichungstag und Bekanntmachung des Hinweises auf die Patenterteilung: **02.02.2022**
(21) Anmeldenummer: 18762618.9
(22) Anmeldetag: 13.07.2018
(51) Int. Cl.: G05B 19/042, G05B 9/02

(54) **REDUNDANTE PROZESSSTEUERUNG**
REDUNDANT PROCESS CONTROL
COMMANDE DE PROCESSUS REDONDANTE

(30) Priorität: 18.08.2017 DE 102017007815
(43) Veröffentlichungstag der Anmeldung: 24.06.2020
(73) Patentinhaber: WAGO Verwaltungsgesellschaft mit beschränkter Haftung, 32423 Minden (DE)
(72) Erfinder: PATZELT, Andreas, 32257 Bünde (DE); VOß , Christian, 32427 Minden (DE)
(74) Vertreter: Koplin, Moritz
(86) Internationale Anmeldenummer: PCT/IB2018/000868
(87) Internationale Veröffentlichungsnummer: WO 2019/034928

(56) Entgegenhaltungen:
- DE-A1-102006 061 063
- DE-A1-102009 027 303
- DE-C1- 10 235 502

## Beschreibung

### GEBIET

Die vorliegende Erfindung bezieht sich auf ein System und Verfahren zur Steuerung eines Prozesses.

### HINTERGRUND

In sicherheitsgerichteten Systemen, wie bspw. Systemen gemäß Kategorie 4 nach DIN EN ISO 13849, sind Steuervorrichtungen bzw. deren Elemente oftmals redundant ausgeführt. Um den erforderlichen Diagnosedeckungsgrad zum Erkennen möglicher Fehler zu erreichen, muss zwischen den Steuervorrichtungen eine Kreuzkommunikation zum Datenabgleich erfolgen.

Der Austausch von Daten über die Kreuzkommunikation ist insbesondere bei Steuervorrichtungen erforderlich, in denen ein sicherheitsgerichteter Protokoll-Stack die Eingangsdaten verarbeitet und an eine übergeordnete sichere Steuerung versendet. Werden in beiden Steuervorrichtungen Daten durch den gleichen Protokollstack verarbeitet, müssen gleiche Daten verarbeitet werden, um zu gleichen Ergebnissen kommen zu können.

Abweichende Ergebnisse können entweder durch die Steuervorrichtungen selbst oder eine übergeordnete Steuereinheit aufgedeckt werden und führen in der Regel dazu, dass eine durch die Steuereinheit gesteuerte Anlage in einen sicheren Zustand gebracht wird. In diesem Zustand kann die Anlage ihrer eigentlichen Aufgabe jedoch typischerweise nicht mehr entsprechen.

Da die Steuervorrichtungen niemals zu 100% synchron arbeiten, kann es speziell bei Eingängen zu unterschiedlichen Einlesezeitpunkten kommen, die bereits im Bereich von wenigen Nanosekunden zu unterschiedlichen Eingangsdaten führen können. Weiterhin können unvermeidbare Toleranzen in den Eingangsschaltkreisen auch bei gleichzeitiger Abtastung zu unterschiedlichen Eingangsdaten führen.

Nach dem Einlesen werden die Eingangsdaten daher oftmals bereits vor der weiteren Verarbeitung durch die Steuervorrichtungen über die Kreuzkommunikation ausgetauscht und abgeglichen (siehe bspw. die Lehre der Druckschrift EP 1 302 826 A1). Dies kostet jedoch zusätzliche Prozessorzeit und führt zu einer verlängerten Reaktionszeit des Systems.

Aus der DE 10 2009 027303 A1 ist ein zweikanaliger Drehgeber bekannt, der mit zwei Rechnern verbunden ist, wobei jeder Rechner vom Drehgeber die Messwerte zur Auswertung erhält. Beide Rechner ermitteln auf der Grundlage der jeweils bei ihnen hinterlegten Zeitintervalle eine Geschwindigkeit und tauschen die berechneten Geschwindigkeitswerte zum Vergleich miteinander aus. Weiterer Stand der Technik kann der DE 10 2006 061063 A1 und der DE 102 35 502 C1 entnommen werden.

### ZUSAMMENFASSUNG

Die Erfindung bereichert diesbezüglich den Stand der Technik, als die Steuervorrichtungen in einem erfindungsgemäßen System/Verfahren die Eingangsdaten zeitgleich erhalten. Dadurch kann die Notwendigkeit eines Abgleichs der Eingangsdaten über die Kreuzkommunikation vermieden werden.

Insbesondere wird von den Steuervorrichtungen der Eingangs-Datenstrom der jeweils anderen Steuervorrichtung zusätzlich zum eigenen Eingangs-Datenstrom eingelesen, was dadurch erreicht wird, dass beide Steuervorrichtungen zwei Schnittstellen parallel betreiben. Auf diese Weise erhalten beide Steuervorrichtungen die gleiche zweikanalige Datenbasis, ohne die Notwendigkeit einer Kreuzkommunikation. Stattdessen kann der Datenabgleich zwischen den zwei Eingangs-Datenströmen unmittelbar nach dem Ende der Datenübertragung im Speicher der beiden Steuervorrichtungen erfolgen. Eine zusätzliche Übertragung der Daten über die Kreuzkommunikation vor der weiteren Verarbeitung durch den sicherheitsgerichteten Protokoll-Stack ist somit nicht erforderlich.

Ein erfindungsgemäßes System zur Steuerung eines Prozesses umfasst eine erste Steuervorrichtung, welche einen ersten Prozessor, eingerichtet zum Verarbeiten von ersten Daten, und eine erste Kommunikationsschnittstelle einer ersten Kommunikationseinheit, eingerichtet zum Empfangen der ersten Daten, umfasst. Das System umfasst ferner eine zweite Steuervorrichtung, welche einen zweiten Prozessor, eingerichtet zum Verarbeiten von zweiten Daten, und eine zweite Kommunikationsschnittstelle einer zweiten Kommunikationseinheit, eingerichtet zum Empfangen der zweiten Daten, umfasst.

Die erste Kommunikationseinheit umfasst eine dritte Kommunikationsschnittstelle und die zweite Kommunikationseinheit umfasst eine vierte Kommunikationsschnittstelle, wobei die dritte Kommunikationsschnittstelle an der zweiten Kommunikationsschnittstelle angeschlossen und der erste Prozessor eingerichtet ist, die durch die dritte Kommunikationsschnittstelle empfangenen zweiten Daten und die durch die erste Kommunikationsschnittstelle empfangenen ersten Daten zu verarbeiten, insbesondere miteinander zu vergleichen.

Die vierte Kommunikationsschnittstelle ist an der ersten Kommunikationsschnittstelle angeschlossen und der zweite Prozessor ist eingerichtet, die durch die zweite Kommunikationsschnittstelle empfangenen zweiten Daten und die durch die vierte Kommunikationsschnittstelle empfangenen ersten Daten zu verarbeiten, insbesondere miteinander zu vergleichen. Die erste Kommunikationsschnittstelle und die zweite Kommunikationsschnittstelle sind als Serial Peripheral Interface, SPI, Master-Kommunikationsschnittstellen und die dritte Kommunikationsschnittstelle und die vierte Kommunikationsschnittstelle sind als SPI-Slave-Kommunikationsschnittstellen ausgebildet.

Dabei ist unter dem Begriff "Steuervorrichtung", wie er in der Beschreibung und den Ansprüchen verwendet wird, insbesondere ein Mikrocontroller zu verstehen, welcher bspw. zur Steuerung einer Anlage bzw. zur Verwendung als Teil einer Anlagensteuerung ausgebildet ist. Ferner ist unter dem Begriff "Kommunikationsschnittstelle", wie er in der Beschreibung und den Ansprüchen verwendet wird, insbesondere eine Hardware- oder Netzwerkschnittstelle zu verstehen, die zum Anschluss einer oder mehrerer Drahtleitungen ausgebildet ist.

Des Weiteren sind unter dem Begriff "Daten", wie er in der Beschreibung und den Ansprüchen verwendet wird, insbesondere aus elektrischen Signalen abgeleitete digitale Daten zu verstehen. Ferner ist unter dem Begriff "Prozessor", wie er in der Beschreibung und den Ansprüchen verwendet wird, insbesondere eine elektronische Schaltung zu verstehen, die eingerichtet ist, Daten auf Basis von in einem Speicher gespeicherten Anweisungen zu verarbeiten.

Vorzugsweise umfasst das Verarbeiten durch den ersten Prozessor ein Vergleichen der ersten Daten mit den zweiten Daten, und/oder umfasst das Verarbeiten durch den ersten Prozessor ein Weiterleiten der ersten Daten und/oder der zweiten Daten und/oder eines Vergleichsergebnisses.

Vorzugsweise umfasst das Verarbeiten durch den zweiten Prozessor ein Vergleichen der ersten Daten mit den zweiten Daten und/oder umfasst das Verarbeiten durch den zweiten Prozessor ein Weiterleiten der ersten Daten und/oder der zweiten Daten und/oder eines Vergleichsergebnisses.

Vorzugsweise ist der erste Prozessor eingerichtet, wenn die durch die dritte Kommunikationsschnittstelle empfangenen zweiten Daten mit den durch die erste Kommunikationsschnittstelle empfangenen ersten Daten übereinstimmen, auf Basis der empfangenen ersten Daten und/oder der empfangenen zweiten Daten erste Ausgangsdaten zu bestimmen und der zweite Prozessor eingerichtet, wenn die durch die zweite Kommunikationsschnittstelle empfangenen zweiten Daten mit den durch die vierte Kommunikationsschnittstelle empfangenen ersten Daten übereinstimmen, auf Basis der empfangenen ersten Daten und/oder der empfangenen zweiten Daten zweite Ausgangsdaten zu bestimmen.

Vorzugsweise ist das System eingerichtet, die ersten Ausgangsdaten und die zweiten Ausgangsdaten zu vergleichen und, wenn die ersten Ausgangsdaten und die zweiten Ausgangsdaten übereinstimmen, die ersten Ausgangsdaten und/oder die zweiten Ausgangsdaten an eine Steuereinheit zu übertragen oder, wenn die ersten Ausgangsdaten und die zweiten Ausgangsdaten nicht übereinstimmen, ein Fehlersignal oder aus den nicht übereinstimmenden ersten und zweiten Ausgangsdaten gemäß einer logischen oder arithmetischen Operation bestimmte dritte Ausgangsdaten (bei analogen Werten z. B. Mittelwerte, Minimalwerte, Maximalwerte, oder auch Ersatzwerte) an die Steuereinheit zu übertragen.

Vorzugsweise umfasst das System ferner eine Steuereinheit; wobei die erste Steuervorrichtung eingerichtet ist, die ersten Ausgangsdaten an die Steuereinheit zu übertragen, und die zweite Steuervorrichtung eingerichtet ist, die zweiten Ausgangsdaten an die Steuereinheit zu übertragen und die Steuereinheit eingerichtet ist, die ersten Ausgangsdaten und die zweiten Ausgangsdaten zu vergleichen und die ersten Ausgangsdaten und die zweiten Ausgangsdaten zu verwerfen, wenn die ersten Ausgangsdaten und die zweiten Ausgangsdaten nicht übereinstimmen.

Vorzugsweise sind die erste Kommunikationsschnittstelle und die zweite Kommunikationsschnittstelle als Serial Peripheral Interface, SPI, Master-Kommunikationsschnittstellen und die dritte Kommunikationsschnittstelle und die vierte Kommunikationsschnittstelle als SPI-Slave-Kommunikationsschnittstellen ausgebildet.

Ein erfindungsgemäßes Verfahren umfasst ein gleichzeitiges Senden erster Prozesssignale an eine Serial Peripheral Interface, SPI, Master-Kommunikationsschnittstelle einer ersten Steuervorrichtung und an eine SPI-Slave-Kommunikationsschnittstelle einer zweiten Steuervorrichtung, ein gleichzeitiges Senden zweiter Prozesssignale an eine SPI-Master-Kommunikationsschnittstelle der zweiten Steuervorrichtung und an eine SPI-Slave-Kommunikationsschnittstelle der ersten Steuervorrichtung.

Das erfindungsgemäße Verfahren umfasst ferner ein Überprüfen der durch die SPI-Master-Kommunikationsschnittstelle und die SPI-Slave-Kommunikationsschnittstelle der ersten Steuervorrichtung empfangenen Prozesssignale auf Übereinstimmung, insbesondere durch die erste Steuervorrichtung, ein Überprüfen der durch die SPI-Master-Kommunikationsschnittstelle und die SPI-Slave-Kommunikationsschnittstelle der zweiten Steuervorrichtung empfangenen Prozesssignale auf Übereinstimmung, insbesondere durch die zweite Steuervorrichtung, ein Steuern des Prozesses auf Basis der empfangenen Prozesssignale, wenn eine Übereinstimmung zwischen den empfangenen Prozesssignalen festgestellt wurde und ein Überführen des Prozesses in einen vorbestimmten Zustand, wenn keine Übereinstimmung zwischen den empfangenen Prozesssignalen festgestellt wurde.

Dabei sind unter dem Begriff "Prozesssignale", wie er in der Beschreibung und den Ansprüchen verwendet wird, insbesondere digitale Mess-oder Zustandsdaten zu verstehen, welche den Prozess charakterisieren.

Vorzugsweise umfasst das Empfangen der ersten Prozesssignale durch die zweite Steuervorrichtung ein Abhören der Kommunikation der SPI-Master-Kommunikationsschnittstelle der ersten Steuervorrichtung durch die SPI-Slave-Kommunikationsschnittstelle der zweiten Steuervorrichtung und das Empfangen der zweiten Prozesssignale durch die erste Steuervorrichtung ein Abhören der Kommunikation der SPI-Master-Kommunikationsschnittstelle der zweiten Steuervorrichtung durch die SPI-Slave-Kommunikationsschnittstelle der ersten Steuervorrichtung.

Vorzugsweise umfasst das Senden der ersten Prozesssignale an die SPI-Slave-Kommunikationsschnittstelle der zweiten Steuervorrichtung ein Abwandeln und insbesondere ein Invertieren der ersten Prozesssignale.

Vorzugsweise umfasst das Verfahren ferner ein Überprüfen, durch die zweite Steuervorrichtung, der abgewandelten ersten Prozesssignale und der zweiten Prozesssignale auf Übereinstimmung und ein Überführen des Prozesses in einen vorbestimmten Zustand, wenn durch die zweite Steuervorrichtung eine Übereinstimmung zwischen den abgewandelten ersten Prozesssignalen und den zweiten Prozesssignalen festgestellt wurde.

Vorzugsweise umfasst das Verfahren ferner ein Ableiten von Prozessdaten aus den empfangenen Prozesssignalen, ein Bestimmen, durch die erste Steuervorrichtung und die zweite Steuervorrichtung, von Steuerungsdaten auf Basis der Prozessdaten, ein Durchführen eines Kreuzvergleichs hinsichtlich der Steuerungsdaten der ersten Steuervorrichtung und der zweiten Steuervorrichtung, ein Ableiten von Steuerungssignalen aus den Steuerungsdaten und ein Ausgeben der Steuerungssignale.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 ein Blockdiagramm eines beispielhaften Systems;
Fig. 2 einen beispielhaften Signalverlauf in dem System der Fig. 1;
Fig. 3 ein Blockdiagramm des beispielhaften Systems der Fig. 1 mit weiteren Elementen; und
Fig. 4 ein Ablaufdiagramm eines beispielhaften Verfahrens zeigt.

Dabei sind in den Zeichnungen gleiche Elemente durch gleiche Bezugszeichen gekennzeichnet.

### DETAILLIERTE BESCHREIBUNG

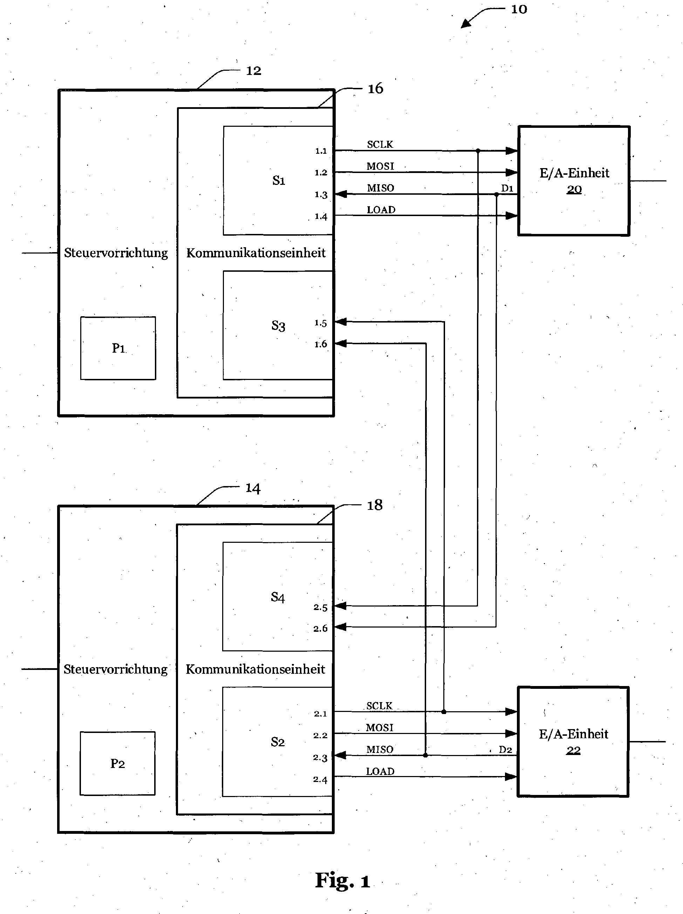

Fig. 1 zeigt ein Blockdiagramm eines beispielhaften Systems 10. Das System 10 umfasst eine erste Steuervorrichtung 12 und eine zweite Steuervorrichtung 14 (bspw. Mikrocontroller). Die erste Steuervorrichtung 12 umfasst einen ersten Prozessor P1 und eine erste Kommunikationseinheit 16, und die zweite Steuervorrichtung 14 umfasst einen zweiten Prozessor P2 und eine zweite Kommunikationseinheit 18. Dabei können die erste Steuervorrichtung 12 und die zweite Steuervorrichtung 14 gleiche Bauelemente aufweisen.

Die Kommunikationseinheiten 16, 18 umfassen jeweils zwei Kommunikationsschnittstellen S1 und S3 bzw. S2 und S4. Die erste Kommunikationsschnittstelle S1 ist mit einer ersten E/A-Einheit 20 verbunden und die zweite Kommunikationsschnittstelle S2 ist mit einer zweiten E/A-Einheit 22 verbunden. Die E/A-Einheiten 20, 22 können bspw. als (8-Bit, 16-Bit, 32-Bit, etc.) E/A-Portexpander ausgebildet sein.

Die erste Kommunikationsschnittstelle S1 und die zweite Kommunikationsschnittstelle S2 können als SPI-Master-Schnittstellen ausgebildet sein, die ein Einlesen von ersten und zweiten Daten D1, D2 von SPI-Slave-Schnittstellen der E/A-Einheiten 20, 22 Taktsignal-basiert steuern. Dabei können die E/A-Einheiten 20, 22 eingerichtet sein, die ersten und zweiten Daten D1, D2 an einem MISO-Ausgang auszugeben, wenn an einem Taktsignaleingang der E/A-Einheiten 20, 22 ein Taktsignal SCLK anliegt.

Ferner können die ersten Daten D1 und die zweiten Daten D2 auf einer gemeinsamen Datenbasis fußen, so dass die ersten Daten D1 den zweiten Daten D2 entsprechen, wenn das System 10 fehlerfrei funktioniert. Somit kann durch einen Vergleich der ersten Daten D1 und der zweiten Daten D2, bzw. durch einen Vergleich von aus den der ersten Daten D1 bzw. den zweiten Daten D2 abgeleiteten Daten, das System 10 auf Fehler überprüft werden.

Um die zweiten Daten D2 der ersten Kommunikationseinheit 16 ohne Zeitverzögerung zur Verfügung stellen zu können, ist die dritte Kommunikationsschnittstelle S3 an der zweiten Kommunikationsschnittstelle S2 angeschlossen. Bspw. kann die dritte Kommunikationsschnittstelle S3 als SPI-Slave-Schnittstelle ausgebildet sein, wobei der MOSI (Master-Out-Slave-In) Eingang der dritten Kommunikationsschnittstelle S3 mit dem MISO (Master-In-Slave-Out) Eingang der zweiten Kommunikationsschnittstelle S2 bzw. dem MISO (Master-In-Slave-Out) Ausgang der zweiten E/A-Einheit 22 verbunden ist.

Ebenso ist, um die ersten Daten D1 der zweiten Kommunikationseinheit 18 ohne Zeitverzögerung zur Verfügung stellen zu können, die vierte Kommunikationsschnittstelle S4 an der ersten Kommunikationsschnittstelle S1 angeschlossen. Bspw. kann die vierte Kommunikationsschnittstelle S4, wie die dritte Kommunikationsschnittstelle S3, als SPI-Slave-Schnittstelle ausgebildet sein, wobei der MOSI-Eingang der vierten Kommunikationsschnittstelle S4 mit dem MISO-Eingang der ersten Kommunikationsschnittstelle S1 bzw. dem MISO-Ausgang der ersten E/A-Einheit 20 verbunden ist.

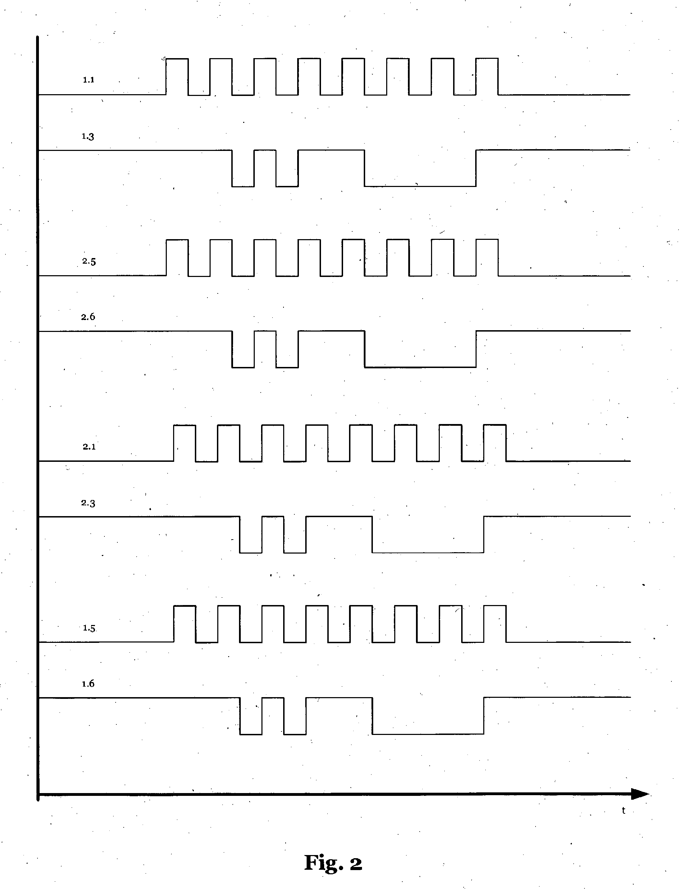

Fig. 2 zeigt dazu einen beispielhaften Signalverlauf an Ausgängen/Eingängen des Systems 10. Wird durch die erste Kommunikationsschnittstelle S1 (SPI-Master-Schnittstelle) an dem Ausgang 1.1 ein Taktsignal SCLK ausgegeben, gibt die erste E/A-Einheit 20 die ersten Daten D1 aus, welche von der ersten Kommunikationsschnittstelle S1 über den Eingang 1.3 (MISO) eingelesen werden. Die ersten Daten D1 werden zudem durch die vierte Kommunikationsschnittstelle S4 über den Eingang 2.6 (MOSI) eingelesen, da das durch die erste Kommunikationsschnittstelle S1 erzeugte Taktsignal SCLK am Eingang 2.5 der vierten Kommunikationsschnittstelle S4 (SPI-Slave-Schnittstelle) anliegt.

Ebenso gibt, wenn durch die zweite Kommunikationsschnittstelle S2 (SPI-Master-Schnittstelle) an dem Ausgang 2.1 ein Taktsignal SCLK ausgegeben wird, die zweite E/A-Einheit 22 die zweiten Daten D2 aus, welche von der zweiten Kommunikationsschnittstelle S2 über den Eingang 2.3 (MISO) eingelesen werden. Die zweiten Daten D2 werden zudem durch die dritte Kommunikationsschnittstelle S3 über den Eingang 1.6 (MOSI) eingelesen, da das durch die zweite Kommunikationsschnittstelle S2 erzeugte Taktsignal SCLK am Eingang 1.5 der dritten Kommunikationsschnittstelle S3 (SPI-Slave-Schnittstelle) anliegt.

Dabei spielt es keine Rolle, wenn die Taktsignale SCLK der ersten und zweiten Kommunikationsschnittstellen S1, S2 nicht vollständig synchron sind, da die Daten bis zur nächsten Übertragung gespeichert werden können. Somit wird nur eine Synchronisation zwischen den Kommunikationsschnittstellen S1 und S4 bzw. S2 und S3 benötigt, um die ersten und zweiten Daten D1, D2 an die erste und vierte Kommunikationsschnittstelle S1, S4 bzw. die zweite und dritte Kommunikationsschnittstelle S2, S3 korrekt zu übertragen. Dies wird jedoch bereits durch die gemeinsamen Taktleitungen erreicht.

Der erste Prozessor P1 ist eingerichtet, die durch die dritte Kommunikationsschnittstelle S3 empfangenen zweiten Daten D2 und die durch die erste Kommunikationsschnittstelle S1 empfangenen ersten Daten D1 zu verarbeiten. Das Verarbeiten kann einen Vergleich der ersten Daten D1 mit den zweiten Daten D2 einschließen und die weitere Verarbeitung kann von dem Ergebnis des Vergleichs abhängen. Bspw. kann, wenn der Vergleich der ersten Daten D1 mit den zweiten Daten D2 ergibt, dass diese nicht identisch sind, die weitere Verarbeitung abgebrochen werden und stattdessen ein Fehlersignal erzeugt/ausgegeben werden.

Ebenso ist der zweite Prozessor P2 eingerichtet, die durch die vierte Kommunikationsschnittstelle S4 empfangenen ersten Daten D1 und die durch die zweite Kommunikationsschnittstelle S2 empfangenen zweiten Daten D2 zu verarbeiten. Das Verarbeiten kann einen Vergleich der zweiten Daten D2 mit den ersten Daten D1 einschließen und die weitere Verarbeitung kann von dem Ergebnis des Vergleichs abhängen. Bspw. kann, wenn der Vergleich der zweiten Daten D2 mit den ersten Daten D1 ergibt, dass diese nicht identisch sind, die weitere Verarbeitung abgebrochen werden und stattdessen ein Fehlersignal erzeugt/ausgegeben werden.

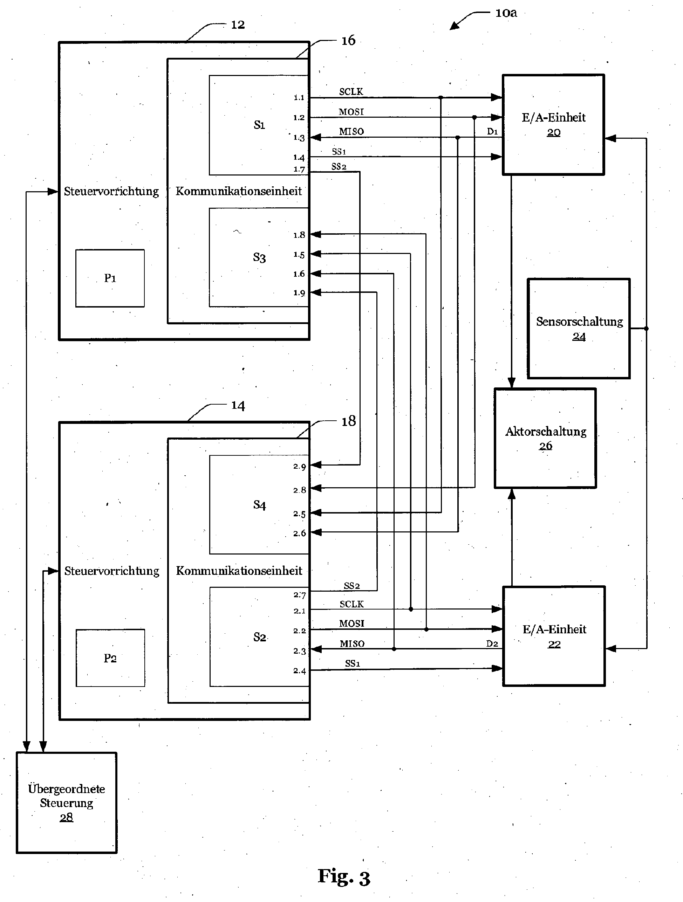

Fig. 3 zeigt ein Blockdiagramm des beispielhaften Systems 10 der Fig. 1 mit weiteren Elementen. So umfasst das in Fig. 3 gezeigte System 10a eine Sensorschaltung 24, eine Aktorschaltung 26 und eine übergeordnete Steuerung (Steuereinheit) 28. Die Sensorschaltung 24, welche einen oder mehrere Sensoren umfassen kann, stellt Messwerte bereit, die den Zustand einer Anlage charakterisieren. Die Messwerte werden an die E/A-Einheiten 20, 22 übertragen, welche die Messwerte als erste Daten D1 und zweite Daten D2 and die Kommunikationsschnittstellen S1, S4 bzw. die Kommunikationsschnittstellen S2, S3 übertragen. Die Übertragung der Messwerte and die E/A-Einheiten 20, 22 kann dabei seriell oder parallel erfolgen, wobei die E/A-Einheiten 20, 22 bspw. Seriell-Parallel-Wandler umfassen können.

Die Prozessoren P1, P2 der Steuervorrichtungen 12, 14 vergleichen die empfangenen Daten D1, D2, um Mess- und/oder Übertragungsfehler zu erkennen. Wird kein Fehler festgestellt, bestimmen die Steuervorrichtungen 12, 14 Steuersignale oder leiten die empfangenen Daten D1, D2 an die übergeordnete Steuerung 28 weiter, die aus den empfangenen Daten D1, D2 Steuerdaten bestimmt und den Steuervorrichtungen 12, 14 bereitstellt. Die Steuervorrichtungen 12, 14 gleichen die bestimmten Steuerdaten mittels einer Kreuzkommunikation der Steuerdaten oder aus den Steuerdaten abgeleiteter Daten ab.

Die Kreuzkommunikation kann, wie in Fig. 3 angedeutet, über die Kommunikationsschnittstellen S1, S4 bzw. die Kommunikationsschnittstellen S2, S3 durchgeführt werden. Bspw. können, wenn die Kommunikationsschnittstellen S1, S2 als SPI-Master-Schnittstellen ausgebildet sind, die SPI-Slave-Schnittstellen S3, S4 über die "Slave-Select" Ausgänge 1.7, 2.7 angesprochen werden, so dass an den MOSI-Ausgängen 1.2, 2.2 ausgegebene Daten nur an den Eingängen 1.8, 2.8 eingelesen werden.

Ist der Abgleich erfolgreich, können die Steuerdaten bzw. aus den Steuerdaten abgeleitete Steuersignale über die MOSI-Ausgänge 1.2, 2.2 bei entsprechender Ansprache der E/A-Einheiten 20, 22 mittels der "Slave-Select" Ausgänge 1.4, 2.4 an die E/A-Einheiten 20, 22 übertragen werden, welche die Steuerdaten/-signale an die Aktorschaltung 26 überträgt. Die Aktorschaltung 26 kann einen oder mehrere Aktoren umfassen und diese auf Basis der empfangenen Steuerdaten/-signale steuern, wobei der eine oder die mehreren Aktoren zur Steuerung eines Zustands der Anlage dienen.

Wird hingegen ein Mess- und/oder Übertragungsfehler erkannt oder scheitert der Abgleich der Steuerdaten, kann eine der Steuervorrichtungen 12, 14 oder die übergeordnete Steuerung 28 ein Fehlersignal erzeugen/ausgeben. Das Fehlersignal kann bspw. bewirken, dass die Aktorschaltung 26 das System 10a oder die Anlage in einen sicheren Zustand überführt.

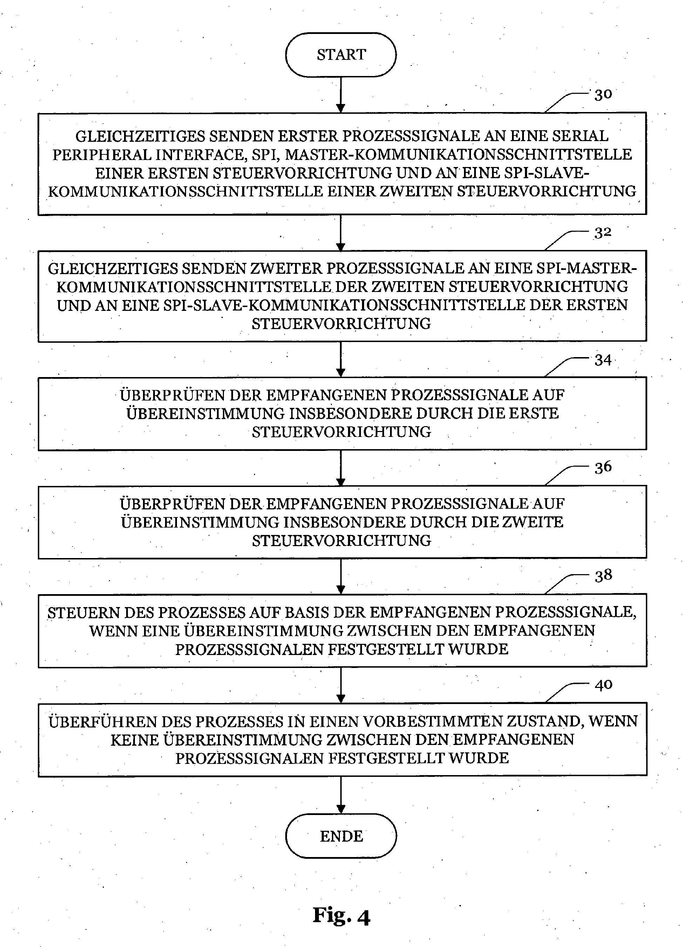

Fig. 4 zeigt ein Ablaufdiagramm eines beispielhaften Verfahrens. Bei Schritt 30 werden erste Prozesssignale D1 gleichzeitig an die Serial Peripheral Interface, SPI, Master-Kommunikationsschnittstelle S1 der ersten Steuervorrichtung 12 und an die SPI-Slave-Kommunikationsschnittstelle S4 der zweiten Steuervorrichtung 14 gesendet.

Bei Schritt 32 werden zweite Prozesssignale D2 an die SPI-Master-Kommunikationsschnittstelle S2 der zweiten Steuervorrichtung 14 und an die SPI-Slave-Kommunikationsschnittstelle S3 der ersten Steuervorrichtung 12 gesendet.

Bei Schritt 34 werden die empfangenen Prozesssignale auf Übereinstimmung überprüft, bspw. durch die erste Steuervorrichtung 12 oder die übergeordnete Steuerung 28.

Bei Schritt 36 werden die empfangenen Prozesssignale auf Übereinstimmung überprüft, bspw. durch die zweite Steuervorrichtung 14 oder die übergeordnete Steuerung 28.

Bei Schritt 38 wird der Prozesses auf Basis der empfangenen Prozesssignale D1/D2 gesteuert, wenn eine Übereinstimmung zwischen den empfangenen Prozesssignalen festgestellt wurde.

Bei Schritt 40 wird der Prozesses in einen vorbestimmten Zustand überführt, wenn keine Übereinstimmung zwischen den empfangenen Prozesssignalen D1, D2 festgestellt wurde.

Das Verfahren basiert, wie in Fig. 1 bis Fig. 3 gezeigt, darauf, dass die beiden Steuervorrichtungen 12, 14 voneinander unabhängige serielle Schnittstellen S1, S2 betreiben, die bspw. zur Ansteuerung von Port-Expandern verwendet werden. Bspw. können die SPI-Schnittstellen S1, S2 dazu verwendet werden, Seriell-Parallel-Wandler und auch Parallel-Seriell-Wandler anzusteuern.

Die Steuervorrichtungen 12, 14 können durch den Betrieb der seriellen synchronen Schnittstellen die Eingänge abtasten und außerdem unabhängig voneinander Ausgangsansteuersignale schalten. Dabei ist vorgesehen, dass beide Steuervorrichtungen 12, 14 bereits während des Einlesens der Eingangsdaten D1, D2 von den Ein- und Ausgängen (Daten von digitalen Eingängen, analogen Eingängen, Rücklesesignale von Ausgängen, etc.) zeitgleich die E/A-Daten erhalten. Dies ermöglicht eine Vermeidung des ersten Kreuzabgleichs der Eingangsdaten D1, D2 über die Kreuzkommunikation.

Zur Optimierung der Software-Zykluszeiten wird daher von den zwei Steuervorrichtungen 12, 14 der Eingangs-Datenstrom des jeweils anderen I/o-Kanals zusätzlich zum eigenen Eingangs-Datenstrom eingelesen. Beide Steuervorrichtungen 12, 14 betreiben somit zwei Schnittstellen. Bspw. betreibt eine Steuervorrichtung 12, 14 eine SPI-Schnittstelle als SPI-Master- Schnittstelle und eine weitere SPl-Schnittstelle zum "mitlauschen" der SPl-Schnittstelle der anderen Steuervorrichtung 12, 14 als SPl-Slave.

Auf diese Weise erhalten beide Steuervorrichtungen 12, 14 die gleiche zweikanalige Datenbasis ohne einen zusätzlichen Datenaustausch. Der Datenabgleich zwischen den zwei Eingangsdatenströmen kann ferner unmittelbar nach dem Ende der Datenübertragung in einem Speicher (nicht gezeigt) der beiden Steuervorrichtungen 12, 14 erfolgen. Eine zusätzliche Übertragung der Informationen über die Kreuzkommunikation ist vor der weiteren Verarbeitung bspw. durch einen sicherheitsgerichteten Protokoll-Stack nicht erforderlich.

Ferner kann einer der beiden Eingangsdatenströme invertiert eingelesen werden. Dies kann z. B. helfen, Kurzschlüssen zwischen den Datenleitungen der SPI-Schnittstellen zu erkennen. Ferner werden Kommunikationszyklen für die Kreuzkommunikation eingespart, die Reaktionszeit, insbesondere die Sicherheitsreaktionszeit verringert, und es können einfachere und langsamere Steuervorrichtungen 12, 14 eingesetzt werden.

### BEZUGSZEICHENLISTE

- 10: System
- 12: Steuervorrichtung
- 14: Steuervorrichtung
- 16: Kommunikationseinheit
- 18: Kommunikationseinheit
- 20: E/A-Einheit
- 22: E/A-Einheit
- 24: Sensorschaltung
- 26: Aktorschaltung
- 28: Übergeordnete Steuerung/Steuereinheit
- 30-40: Schritte
- D1: Daten
- D2: Daten
- P1: Prozessor
- P2: Prozessor
- S1: Schnittstelle
- S2: Schnittstelle
- S3: Schnittstelle
- S4: Schnittstelle
- SCLK: Taktsignal

## Patentansprüche

1. System (10, 10a) zur Steuerung eines Prozesses, umfassend:
eine erste Steuervorrichtung (12), welche einen ersten Prozessor (P1), eingerichtet zum Verarbeiten von ersten Daten (D1), und eine erste Kommunikationsschnittstelle (S1) einer ersten Kommunikationseinheit (16), eingerichtet zum Empfangen der ersten Daten (D1), umfasst;
eine zweite Steuervorrichtung (14), welche einen zweiten Prozessor (P2), eingerichtet zum Verarbeiten von zweiten Daten (D2), und eine zweite Kommunikationsschnittstelle (S2) einer zweiten Kommunikationseinheit (18), eingerichtet zum Empfangen der zweiten Daten (D2), umfasst;
wobei
die erste Kommunikationseinheit (12) eine dritte Kommunikationsschnittstelle (S3) und die zweite Kommunikationseinheit (18) eine vierte Kommunikationsschnittstelle (S4) umfassen, wobei
die dritte Kommunikationsschnittstelle (S3) an der zweiten Kommunikationsschnittstelle (S2) angeschlossen und der erste Prozessor (P1) eingerichtet ist, die durch die dritte Kommunikationsschnittstelle (S3) empfangenen zweiten Daten (D2) und die durch die erste Kommunikationsschnittstelle (S1) empfangenen ersten Daten (D1) zu verarbeiten; und
die vierte Kommunikationsschnittstelle (S4) an der ersten Kommunikationsschnittstelle (S1) angeschlossen und der zweite Prozessor (P2) eingerichtet ist, die durch die zweite Kommunikationsschnittstelle (S2) empfangenen zweiten Daten (D2) und die durch die vierte Kommunikationsschnittstelle (S4) empfangenen ersten Daten (D1) zu verarbeiten;
**dadurch gekennzeichnet, dass**
die erste Kommunikationsschnittstelle (S1) und die zweite Kommunikationsschnittstelle (S2) als Serial Peripheral Interface, SPI, Master-Kommunikationsschnittstellen; und
die dritte Kommunikationsschnittstelle (S3) und die vierte Kommunikationsschnittstelle (S4) als SPI-Slave-Kommunikationsschnittstellen ausgebildet sind.

2. System (10, 10a) nach Anspruch 1, wobei
das Verarbeiten durch den ersten Prozessor (P1) ein Vergleichen der ersten Daten (D1) mit den zweiten Daten (D2) umfasst, und/oder
wobei das Verarbeiten durch den ersten Prozessor (P1) ein Weiterleiten der ersten Daten (D1) und/oder der zweiten Daten (D2) und/oder eines Vergleichsergebnisses umfasst.

3. System (10, 10a) nach Anspruch 1 oder 2, wobei
das Verarbeiten durch den zweiten Prozessor (P2) ein Vergleichen der ersten Daten (D1) mit den zweiten Daten (D2) umfasst, und/oder
wobei das Verarbeiten durch den zweiten Prozessor (P2) ein Weiterleiten der ersten Daten (D1) und/oder der zweiten Daten (D2) und/oder eines Vergleichsergebnisses umfasst.

4. System (10, 10a) nach einem der Ansprüche 1 bis 3, wobei
der erste Prozessor (P1) eingerichtet ist, wenn die durch die dritte Kommunikationsschnittstelle (S3) empfangenen zweiten Daten (D2) mit den durch die erste Kommunikationsschnittstelle (S1) empfangenen ersten Daten (D1) übereinstimmen, auf Basis der empfangenen ersten Daten (D1) und/oder der empfangenen zweiten Daten (D2) erste Ausgangsdaten (A1) zu bestimmen; und
der zweite Prozessor (P2) eingerichtet ist, wenn die durch die zweite Kommunikationsschnittstelle (S2) empfangenen zweiten Daten (D2) mit den durch die vierte Kommunikationsschnittstelle (S4) empfangenen ersten Daten (D1) übereinstimmen, auf Basis der empfangenen ersten Daten (D1) und/oder der empfangenen zweiten Daten (D2) zweite Ausgangsdaten (A2) zu bestimmen.

5. System (10, 10a) nach Anspruch 4, wobei das System (10, 10a) eingerichtet ist, die ersten Ausgangsdaten (A1) und die zweiten Ausgangsdaten (A2) zu vergleichen; und
wenn die ersten Ausgangsdaten (A1) und die zweiten Ausgangsdaten (A2) übereinstimmen, die ersten Ausgangsdaten (A1) und/oder die zweiten Ausgangsdaten (A2) an eine Steuereinheit zu übertragen; oder
wenn die ersten Ausgangsdaten (A1) und die zweiten Ausgangsdaten (A2) nicht übereinstimmen, ein Fehlersignal oder aus den nicht übereinstimmenden ersten und zweiten Ausgangsdaten gemäß einer logischen oder arithmetischen Operation bestimmte dritte Ausgangsdaten an die Steuereinheit zu übertragen.

6. System (10, 10a) nach Anspruch 4, ferner umfassend:
eine Steuereinheit (28); wobei
die erste Steuervorrichtung (12) eingerichtet ist, die ersten Ausgangsdaten (A1) an die Steuereinheit (28) zu übertragen; und
die zweite Steuervorrichtung (14) eingerichtet ist, die zweiten Ausgangsdaten (A2) an die Steuereinheit (28) zu übertragen; und
die Steuereinheit (28) eingerichtet ist, die ersten Ausgangsdaten (A1) und die zweiten Ausgangsdaten (A2) zu vergleichen und die ersten Ausgangsdaten (A1) und die zweiten Ausgangsdaten (A2) zu verwerfen, wenn die ersten Ausgangsdaten (A1) und die zweiten Ausgangsdaten (A2) nicht übereinstimmen.

7. System (10, 10a) nach einem der Ansprüche 1 bis 6, wobei ein durch die erste Kommunikationsschnittstelle (S1) erzeugtes Taktsignal (SCLK) an einem Eingang (2.5) der vierten Kommunikationsschnittstelle (S4) anliegt; und
ein durch die zweite Kommunikationsschnittstelle (S2) erzeugte Taktsignal (SCLK) an einem Eingang (1.5) der dritten Kommunikationsschnittstelle (S3) anliegt.

8. Verfahren zur Steuerung eines Prozesses, umfassend:
gleichzeitiges Senden (30) erster Prozesssignale an eine Serial Peripheral Interface, SPI, Master-Kommunikationsschnittstelle einer ersten Steuervorrichtung (12) und an eine SPI-Slave-Kommunikationsschnittstelle einer zweiten Steuervorrichtung (14);
gleichzeitiges Senden (32) zweiter Prozesssignale an eine SPI-Master-Kommunikationsschnittstelle der zweiten Steuervorrichtung (14) und an eine SPI-Slave-Kommunikationsschnittstelle der ersten Steuervorrichtung (12);
Überprüfen (34) der durch die SPI-Master-Kommunikationsschnittstelle und die SPI-Slave-Kommunikationsschnittstelle der ersten Steuervorrichtung (12) empfangenen Prozesssignale auf Übereinstimmung;
Überprüfen (36) der durch die SPI-Master-Kommunikationsschnittstelle und die SPI-Slave-Kommunikationsschnittstelle der zweiten Steuervorrichtung (14) empfangenen Prozesssignale auf Übereinstimmung;
Steuern (38) des Prozesses auf Basis der empfangenen Prozesssignale, wenn eine Übereinstimmung zwischen den empfangenen Prozesssignalen festgestellt wurde; und
Überführen (40) des Prozesses in einen vorbestimmten Zustand, wenn keine Übereinstimmung zwischen den empfangenen Prozesssignalen festgestellt wurde.

9. Verfahren nach Anspruch 8, wobei
das Empfangen der ersten Prozesssignale durch die zweite Steuervorrichtung (14) ein Abhören der Kommunikation der SPI-Master-Kommunikationsschnittstelle der ersten Steuervorrichtung (12) durch die SPI-Slave-Kommunikationsschnittstelle der zweiten Steuervorrichtung (14) umfasst; und
das Empfangen der zweiten Prozesssignale durch die erste Steuervorrichtung (12) ein Abhören der Kommunikation der SPI-Master-Kommunikationsschnittstelle der zweiten Steuervorrichtung (14) durch die SPI-Slave-Kommunikationsschnittstelle der ersten Steuervorrichtung (12) umfasst.

10. Verfahren nach Anspruch 8 oder 9, wobei das Senden der ersten Prozesssignale an die SPI-Slave-Kommunikationsschnittstelle der zweiten Steuervorrichtung (14) ein Abwandeln der ersten Prozesssignale umfasst.

11. Verfahren nach Anspruch 10, ferner umfassend:
Überprüfen, durch die zweite Steuervorrichtung (14), der abgewandelten ersten Prozesssignale und der zweiten Prozesssignale auf Übereinstimmung; und
Überführen des Prozesses in einen vorbestimmten Zustand, wenn durch die zweite Steuervorrichtung (14) eine Übereinstimmung zwischen den abgewandelten ersten Prozesssignalen und den zweiten Prozesssignalen festgestellt wurde.

12. Verfahren nach einem der Ansprüche 8 bis 11, ferner umfassend:
Ableiten von Prozessdaten aus den empfangenen Prozesssignalen;
Bestimmen, durch die erste Steuervorrichtung (12) und die zweite Steuervorrichtung (14), von Steuerungsdaten auf Basis der Prozessdaten;
Durchführen eines Kreuzvergleichs hinsichtlich der Steuerungsdaten der ersten Steuervorrichtung (12) und der zweiten Steuervorrichtung (14);
Ableiten von Steuerungssignalen aus den Steuerungsdaten; und
Ausgeben der Steuerungssignale.

## Claims

1. System (10, 10a) for controlling a process, the system comprising:
a first control device (12) which comprises a first processor (P1) adapted for processing first data (D1), and a first communication interface (S1) of a first communication unit (16) adapted for receiving the first data (D1);
a second control device (14) which comprises a second processor (P2) adapted for processing second data (D2), and a second communication interface (S2) of a second communication unit (18) adapted for receiving the second data (D2);
wherein
the first communication unit (12) comprises a third communication interface (S3) and the second communication unit (18) comprises a fourth communication interface (S4), wherein
the third communication interface (S3) is connected to the second communication interface (S2) and the first processor (P1) is adapted to process or compare the second data (D2) received by the third communication interface (S3) and the first data (D1) received by the first communication interface (S1); and
the fourth communication interface (S4) is connected to the first communication interface (S1) and the second processor (P2) is adapted to process the second data (D2) received by the second communication interface (S2) and the first data (D1) received by the fourth communication interface (S4);
**characterised in that**
the first communication interface (S1) and the second communication interface (S2) are configured as serial peripheral interface, SPI, master communication interfaces; and
the third communication interface (S3) and the fourth communication interface (S4) are configured as SPI slave communication interfaces.

2. System (10, 10a) according to claim 1, wherein
the processing by the first processor (P1) comprises comparing the first data (D1) with the second data (D2), and/or
wherein the processing by the first processor (P1) comprises forwarding the first data (D1) and/or the second data (D2) and/or a comparison result.

3. System (10, 10a) according to claim 1 or 2, wherein
the processing by the second processor (P2) comprises comparing the first data (D1) with the second data (D2), and/or
wherein the processing by the second processor (P2) comprises forwarding the first data (D1) and/or the second data (D2) and/or a comparison result.

4. System (10, 10a) according to any of claims 1 to 3, wherein
the first processor (P1) is adapted to determine first output data (A1) on the basis of the received first data (D1) and/or the received second data (D2) if the second data (D2) received by the third communication interface (S3) match the first data (D1) received by the first communication interface (S1); and
the second processor (P2) is adapted to determine second output data (A2) based on the received first data (D1) and/or the received second data (D2) if the second data (D2) received by the second communication interface (S2) match the first data (D1) received by the fourth communication interface (S4).

5. System (10, 10a) according to claim 4, wherein the system (10, 10a) is adapted to compare the first output data (A1) and the second output data (A2); and,
if the first output data (A1) and the second output data (A2) match, to transmit the first output data (A1) and/or the second output data (A2) to a control unit; or,
if the first output data (A1) and the second output data (A2) do not match, to transmit to the control unit an error signal or third output data determined from the non-matching first and second output data according to a logical or arithmetic operation.

6. System (10, 10a) according to claim 4, further comprising:
a control unit (28); wherein
the first control device (12) is adapted to transmit the first output data (A1) to the control unit (28); and the second control device (14) is adapted to transmit the second output data (A2) to the control unit (28); and
the control unit (28) is adapted to compare the first output data (A1) and the second output data (A2) and to discard the first output data (A1) and the second output data (A2) if the first output data (A1) and the second output data (A2) do not match.

7. System (10, 10a) according to any of claims 1 to 6, wherein a clock signal (SCLK) generated by the first communication interface (S1) is present at an input (2.5) of the fourth communication interface (S4); and
a clock signal (SCLK) generated by the second communication interface (S2) is present at an input (1.5) of the third communication interface (S3).

8. Method for controlling a process, the method comprising:
simultaneously transmitting (30) first process signals to a serial peripheral interface, SPI, master communication interface of a first control device (12) and to an SPI slave communication interface of a second control device (14);
simultaneously transmitting (32) second process signals to an SPI master communication interface of the second control device (14) and to an SPI slave communication interface of the first control device (12);
checking (34) the process signals received by the SPI master communications interface and the SPI slave communications interface of the first control device (12) for matching;
checking (36) the process signals received by the SPI master communications interface and the SPI slave communications interface of the second control device (14) for matching;
controlling (38) the process based on the received process signals if a match between the received process signals has been established; and
transferring (40) the process to a predetermined state if no match between the received process signals has been established.

9. Method according to claim 8, wherein
receiving the first process signals by the second control device (14) comprises intercepting the communication of the SPI master communication interface of the first control device (12) by the SPI slave communication interface of the second control device (14); and
receiving the second process signals by the first control device (12) comprises intercepting the communication of the SPI master communication interface of the second control device (14) by the SPI slave communication interface of the first control device (12).

10. Method according to claim 8 or 9, wherein transmitting the first process signals to the SPI slave communication interface of the second control device (14) comprises modifying the first process signals.

11. Method according to claim 10, further comprising:
checking, by the second control device (14), of the modified first process signals and the second process signals for matching; and
transferring the process to a predetermined state if a match between the modified first process signals and the second process signals has been established by the second control device (14).

12. Method according to any of claims 8 to 11, further comprising:
deriving process data from the received process signals;
determining control data by the first control device (12) and the second control device (14) based on the process data;
performing a cross-comparison with respect to the control data of the first control device (12) and the second control device (14);
deriving control signals from the control data; and
outputting the control signals.

## Revendications

1. Système (10, 10a) permettant de commander un processus, comprenant :
un premier dispositif de commande (12), qui comprend un premier processeur (P1) conçu pour traiter des premières données (D1), et une première interface de communication (S1) d'une première unité de communication (16) conçue pour recevoir les premières données (D1) ;
un second dispositif de commande (14), qui comprend un second processeur (P2), conçu pour traiter des secondes données (D2), et une deuxième interface de communication (S2) d'une seconde unité de communication (18), conçue pour recevoir les secondes données (D2) ;
dans lequel
la première unité de communication (12) comprend une troisième interface de communication (S3) et la seconde unité de communication (18) comprend une quatrième interface de communication (S4), dans lequel
la troisième interface de communication (S3) est raccordée à la deuxième interface de communication (S2) et le premier processeur (P1) est conçu pour traiter les secondes données (D2) reçues par la troisième interface de communication (S3) et les premières données (D1) reçues par la première interface de communication (S1) ; et
la quatrième interface de communication (S4) est raccordée à la première interface de communication (S1) et le second processeur (P2) est conçu pour traiter les secondes données (D2) reçues par la deuxième interface de communication (S2) et les premières données (D1) reçues par la quatrième interface de communication (S4) ;
**caractérisé en ce que**,
la première interface de communication (S1) et la deuxième interface de communication (S2) sont réalisées sous la forme d'interfaces de communication maîtres du type interface périphérique série, SPI ; et
la troisième interface de communication (S3) et la quatrième interface de communication (S4) sont réalisées sous la forme d'interfaces de communication esclaves SPI.

2. Système (10, 10a) selon la revendication 1, dans lequel
le traitement par le premier processeur (P1) comprend une comparaison des premières données (D1) aux secondes données (D2), et/ou
dans lequel le traitement par le premier processeur (P1) comprend une transmission des premières données (D1) et/ou des secondes données (D2) et/ou d'un résultat de comparaison.

3. Système (10, 10a) selon la revendication 1 ou 2, dans lequel
le traitement par le second processeur (P2) comprend une comparaison des premières données (D1) aux secondes données (D2), et/ou
dans lequel le traitement par le second processeur (P2) comprend une transmission des premières données (D1) et/ou des secondes données (D2) et/ou d'un résultat de comparaison.

4. Système (10, 10a) selon l'une quelconque des revendications 1 à 3, dans lequel
le premier processeur (P1) est conçu, lorsque les secondes données (D2) reçues par la troisième interface de communication (S3) coïncident avec les premières données (D1) reçues par la première interface de communication (S1), pour déterminer des premières données de sortie (A1) sur la base des premières données reçues (D1) et/ou des secondes données reçues (D2) ; et
le second processeur (P2) est conçu, lorsque les secondes données (D2) reçues par la deuxième interface de communication (S2) coïncident avec les premières données (D1) reçues par la quatrième interface de communication (S4), pour déterminer des deuxièmes données de sortie (A2) sur la base des premières données reçues (D1) et/ou des secondes données reçues (D2).

5. Système (10, 10a) selon la revendication 4, dans lequel le système (10, 10a) est conçu pour comparer les premières données de sortie (A1) et les deuxièmes données de sortie (A2) ; et
lorsque les premières données de sortie (A1) et les deuxièmes données de sortie (A2) coïncident, transférer les premières données de sortie (A1) et/ou les deuxièmes données de sortie (A2) à une unité de commande ; ou
lorsque les premières données de sortie (A1) et les deuxièmes données de sortie (A2) ne coïncident pas, transférer à l'unité de commande un signal d'erreur ou des troisièmes données de sortie déterminées à partir des premières et deuxièmes données de sortie qui ne coïncident pas selon une opération logique ou arithmétique.

6. Système (10, 10a) selon la revendication 4, comprenant en outre :
une unité de commande (28) ; dans lequel
le premier dispositif de commande (12) est conçu pour transférer les premières données de sortie (A1) à l'unité de commande (28) ; et
le second dispositif de commande (14) est conçu pour transférer les deuxièmes données de sortie (A2) à l'unité de commande (28) ; et
l'unité de commande (28) est conçue pour comparer les premières données de sortie (A1) et les deuxièmes données de sortie (A2) et pour rejeter les premières données de sortie (A1) et les deuxièmes données de sortie (A2) lorsque les premières données de sortie (A1) et les deuxièmes données de sortie (A2) ne coïncident pas.

7. Système (10, 10a) selon l'une quelconque des revendications 1 à 6, dans lequel un signal d'horloge (SCLK) généré par la première interface de communication (S1) est appliqué à une entrée (2.5) de la quatrième interface de communication (S4) ; et
un signal d'horloge (SCLK) généré par la deuxième interface de communication (S2) est appliqué à une entrée (1.5) de la troisième interface de communication (S3).

8. Procédé de commande d'un processus, comprenant :
l'envoi (30) simultanément des premiers signaux de processus à une interface de communication principale de type interface périphérique série (SPI) d'un premier dispositif de commande (12) et à une interface de communication esclave SPI d'un second dispositif de commande (14) ;
l'envoi (32) simultanément des seconds signaux de processus à une interface de communication maître SPI du second dispositif de commande (14) et à une interface de communication esclave SPI du premier dispositif de commande (12) ;
la vérification (34) de la coïncidence entre les signaux de processus reçus par l'interface de communication maître SPI et l'interface de communication esclave SPI du premier dispositif de commande (12) ;
la vérification (36) de la coïncidence entre les signaux de processus reçus par l'interface de communication maître SPI et l'interface de communication esclave SPI du second dispositif de commande (14) ;
la commande (38) du processus sur la base des signaux de processus reçus lorsqu'une coïncidence entre les signaux de processus reçus a été établie ; et
le passage (40) du processus à un état prédéterminé lorsqu'aucune coïncidence entre les signaux de processus reçus n'a été établie.

9. Procédé selon la revendication 8, dans lequel
la réception des premiers signaux de processus par le second dispositif de commande (14) comprend une écoute de la communication de l'interface de communication maître SPI du premier dispositif de commande (12) par l'interface de communication esclave SPI du second dispositif de commande (14) ; et
la réception des seconds signaux de processus par le premier dispositif de commande (12) comprend une écoute de la communication de l'interface de communication principale SPI du second dispositif de commande (14) par l'interface de communication esclave SPI du premier dispositif de commande (12).

10. Procédé selon la revendication 8 ou 9, dans lequel l'envoi des premiers signaux de processus à l'interface de communication esclave SPI du second dispositif de commande (14) comprend une modification des premiers signaux de processus.

11. Procédé selon la revendication 10, comprenant en outre :
la vérification, par le second dispositif de commande (14), de la coïncidence des premiers signaux de processus modifiés et des seconds signaux de processus ; et
le passage du processus à un état prédéterminé lorsqu'une coïncidence entre les premiers signaux de processus modifiés et les seconds signaux de processus a été établie par le second dispositif de commande (14).

12. Procédé selon l'une quelconque des revendications 8 à 11, comprenant en outre :
la déduction des données de processus à partir des signaux de processus reçus ;
la détermination, par le premier dispositif de commande (12) et le second dispositif de commande (14), des données de commande sur la base des données de processus ;
la réalisation d'une comparaison croisée par rapport aux données de commande du premier dispositif de commande (12) et du second dispositif de commande (14) ;
la déduction des signaux de commande à partir des données de commande ; et
l'émission des signaux de commande.
